# FASCICULE DE BREVET EUROPEEN

(11) **EP 3 714 440 B1**
(45) Date de publication et mention de la délivrance du brevet: **15.03.2023**
(21) Numéro de dépôt: 18807628.5
(22) Date de dépôt: 23.11.2018
(51) Int. Cl.: G06V 20/52, G06V 40/16, G07C 9/37, G07C 9/15, G07C 9/25

(54) **DISPOSITIF DE CONTROLE D'ACCES D'UN INDIVIDU PAR RECONNAISSANCE 2D OU 3D DU VISAGE D'UN INDIVIDU A PARTIR DE SON ACQUISITION PREALABLE 3D**
ACCESS CONTROL APPARATUS FOR INDIVIDUALS WITH 2D OR 3D FACE RECOGNITION AFTER PRELIMINARY 3D ACQUISITION
ZUTRITTSKONTROLLVORRICHTUNG FÜR PERSONEN MITTELS 2D ODER 3D GESICHTSERKENNUNG NACH VORANGEGANGENER 3D AUFNAHME

(30) Priorité: 24.11.2017 FR 1761149
(43) Date de publication de la demande: 30.09.2020
(73) Titulaire: Photo-Me International PLC, Epsom, Surrey KT19 9AP (GB)
(72) Inventeur: CROLL, Christian, 38640 Claix (FR)
(74) Mandataire: Cabinet Laurent & Charras
(86) Numéro de dépôt international: PCT/EP2018/082323
(87) Numéro de publication internationale: WO 2019/101900

(56) Documents cités:
- EP-A2- 1 696 393
- EP-A2- 2 259 232
- WO-A1-2005/024733
- DE-U1-202014 005 940
- US-A1- 2013 314 908
- US-A1- 2016 171 805

## Description

### DOMAINE DE L'INVENTION

L'invention s'inscrit dans le domaine général du contrôle d'accès, ainsi que toutes ses déclinaisons.

Par contrôle d'accès, on entend les dispositifs aptes à acquérir des données, notamment biométriques ou photographiques, d'un individu, et corollairement, après acquisition de ces données et comparaison avec des données préalablement acquises, de donner ou non l'autorisation d'accéder à un lieu déterminé ou à une prestation déterminée, à l'individu en question.

Il s'agit notamment de contrôle d'accès à toutes manifestations ou tous lieux, tels que par exemple salons, foires, contrôle de sécurité dans les aéroports, gares, etc.

### ETAT ANTERIEUR DE LA TECHNIQUE

La problématique du contrôle d'accès existe depuis longtemps déjà, et s'est en outre particulièrement exacerbée ces dernières années en raison des évènements liés au terrorisme. Parmi les différents problèmes techniques à résoudre, figurent la fiabilité du contrôle proprement dit, autorisant ou non l'accès à un lieu ou une manifestation ou prestation déterminée d'une part et, d'autre part, la rapidité de l'opération de contrôle effectuée. A ces difficultés conséquentes, viennent en outre se greffer la problématique liée à la robustesse de l'installation permettant la réalisation d'un tel contrôle, mais également la diversité des environnement lumineux, susceptibles d'impacter directement la reconnaissance de l'individu en question, et corollairement la fiabilité du contrôle, la variabilité de l'orientation du visage de l'individu, l'influence combiné de plusieurs paramètres à résoudre comme l'attitude, l'âge de l'individu, etc.

Si l'optimisation de la qualité des données biométriques d'un individu a permis d'augmenter la qualité intrinsèque du contrôle, en revanche la rapidité du contrôle n'en a pas été améliorée.

Traditionnellement, un tel contrôle d'accès s'effectue en différentes phases :
- arrêt devant un système biométrique ;
- positionnement des pieds dans des empreintes de pas matérialisées au sol ;
- lecture et/ou écoute des instructions ;
- déplacement d'une caméra en fonction de la taille de l'individu ;
- fixation du regard de ce dernier dans une direction donnée pendant la prise de vue ;
- attente du résultat de la biométrie ;
- et enfin, ouverture ou non d'une porte d'accès.

Les technologies ainsi mises en oeuvre s'avèrent non seulement insuffisantes pour satisfaire à l'exigence de sécurité, mais extrêmement pénalisantes en termes de durée du contrôle, générant des files d'attente souvent insoutenables.

Le document WO2005/024733A1 divulgue un dispositif de contrôle d'accès dynamique d'un individu de l'état de la technique antérieure.

C'est l'objet de la présente invention, de satisfaire à cette double exigence à la fois de sécurité en termes de contrôle et de rapidité.

### EXPOSE DE L'INVENTION

A cet effet, l'invention vise un dispositif de contrôle d'accès dynamique d'un individu par reconnaissance 2D, voire 3D du visage d'un individu à partir de son acquisition préalable ou antérieure 3D.

Ce dispositif comprend :
- une zone de canalisation de la progression dudit individu et d'acquisition d'une image 2D ou 3D du visage de ce dernier, ladite zone étant susceptible d'être obturée au moyen de deux portes escamotables, séparées l'une de l'autre d'une distance déterminée, et dont l'ouverture ne peut être simultanée ;
- au moins deux moyens d'acquisition 2D ou 3D du visage de l'individu lors de sa progression au sein de ladite zone, orientés selon deux angles différents par rapport à la direction principale de ladite zone ;
- des moyens d'éclairement de l'individu dans ladite zone de canalisation et d'acquisition, constitués d'un certain nombre de bandeaux lumineux linéaires, et notamment au moins trois, orientés horizontalement, positionnés selon des hauteurs différentes entre les deux portes ;
- des moyens d'accession à un fichier contenant une image 3D préalablement acquise du visage de l'individu;
- une unité de gestion du dispositif et de traitement des signaux transmis par les moyens d'accession et par les moyens d'acquisition et de gestion du dispositif.

En d'autres termes, l'invention vise un dispositif permettant, tout à la fois, d'assurer la sécurité de l'accès et/ou du contrôle grâce à la qualité de l'image 3D du visage d'un individu, préalablement acquise par les techniques conventionnelles et corollairement, d'assurer la reconnaissance faciale rapide dudit individu par capture 2D ou par capture 3D de son visage, sans nécessiter une attente statique dudit individu devant un moyen quelconque d'acquisition, mais au contraire dynamique, c'est-à-dire que l'individu progresse dans la zone d'acquisition 2D ou 3D de son visage.

Selon l'invention, les moyens d'acquisition sont typiquement constitués de caméras. Celles-ci sont réglables en hauteur, en inclinaison et en rotation, afin notamment de s'adapter à la taille de l'individu. Cela dit, le réglage de ces paramètres est avantageusement définis par défaut en usine, ou adapté en fonction du type de population ciblée. En revanche, les caméras ne subissent pas de déplacement lors du fonctionnement normal du dispositif d'accès. Ce faisant, l'absence de tels déplacements des caméras permet d'augmenter la rapidité du contrôle proprement dit, et corollairement de l'accès de l'individu à la prestation ou au lieu déterminé.

Selon l'invention, les moyens d'accession au fichier 3D de l'individu, sont par exemple constitués d'un organe de lecture d'un support dudit fichier, cet organe étant positionné en amont de la zone de canalisation de la progression de l'individu et d'acquisition d'une image 2D ou 3D du visage de ce dernier. Cet organe est connecté à l'unité de traitement et de gestion.

Avantageusement, cet organe de lecture est typiquement constitué d'un lecteur de badge, intégrant des moyens de stockage de ladite image 3D ou une référence à ladite image 3D du visage de l'individu. En effet, selon certaines législations, il est possible de stocker les données biométriques des individus au sein d'une base de données centralisée. Dans ce cas, le stockage de l'image 3D de l'individu dans le badge peut être remplacé par un identifiant faisant référence à ladite image 3D de la base de données, le lecteur de badge étant connecté à l'unité de traitement et de gestion, elle-même susceptible de se connecter à ladite base de données.

Alternativement, les moyens d'accession sont constitués par un organe de connexion à une base de données, par exemple centralisée, de fichiers 3D d'un certain nombre d'individus.

Selon encore une autre caractéristique de l'invention, la zone de canalisation de la progression et d'acquisition est surmontée par un plafond, destiné à minimiser l'influence de la luminosité extérieure, et corollairement, d'optimiser la qualité de l'acquisition de l'image 2D ou 3D du visage de l'individu.

### BREVE DESCRIPTION DES FIGURES

La manière dont l'invention peut être réalisée, et les avantages qui en découlent, ressortiront mieux de l'exemple de réalisation qui suit, donné à titre indicatif et non limitatif à l'appui des figures annexées.
La figure 1 est une vue schématique en perspective du dispositif de l'invention selon un premier mode de réalisation.
La figure 2 est une représentation schématique en perspective d'un second mode de réalisation de l'invention, dont la figure 3 est une vue de face prise à partir de la sortie de la zone de canalisation et d'acquisition, et la figure 4 une vue latérale.
Les figures 5 à 7 sont des vues analogues aux figures 2 à 5, d'une variante de réalisation.
La figure 8 est une vue schématique en perspective du dispositif de la figure 4, dont la figure 9 est une vue schématique de face.
Les figures 10 et 11 sont des vues schématiques illustrant le principe de fonctionnement du dispositif conforme à l'invention.

### DESCRIPTION DETAILLEE DE L'INVENTION

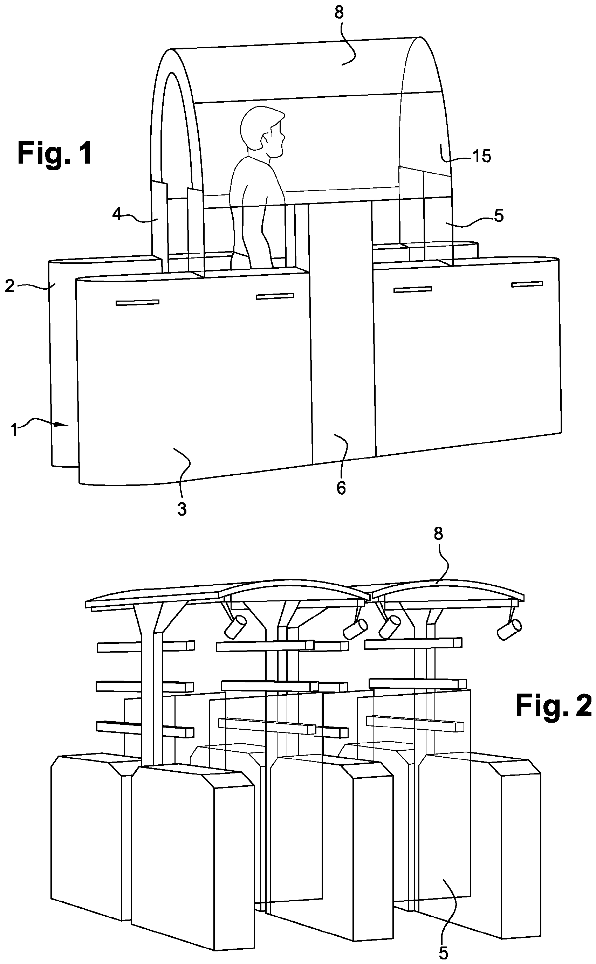

On a donc représenté, au sein de la figure 1, un premier mode de réalisation de l'invention. Celui-ci met en oeuvre la reconnaissance 2D du visage d'un individu.

Ce dispositif de contrôle d'accès comprend une zone de progression d'un individu (1), zone de progression définie par deux cloisons ou parois latérales (2, 3), typiquement séparées l'une de l'autre d'une largeur de 90 centimètres, et s'élevant chacune d'une hauteur d'environ un mètre. Ce faisant, elles permettent la progression effective et sans gêne d'un individu.

Cette zone de progression est cependant susceptible d'être fermée par deux portes (4, 5), séparées l'une de d'autre typiquement d'une distance de 1,60 m.

Selon une caractéristique de l'invention, ces deux portes ne peuvent être ouvertes simultanément.

Dans l'exemple décrit, le dispositif comporte en outre deux piliers centraux (6, 7), qui se situent de part et d'autre du sens de déplacement de l'individu, et typiquement dans l'alignement des cloisons ou parois (2, 3) définissant ladite zone de progression.

Ces piliers sont ainsi positionnés qu'ils n'obstruent pas ladite zone de progression (1). Ils sont surmontés d'un plafond (8), destiné à minimiser l'influence de l'éclairage extérieur. Avantageusement, la face inférieure du plafond (8) est munie d'un revêtement, typiquement de couleur mate et blanche, apte à réfléchir et à diffuser l'éclairement résultant des moyens d'éclairement décrits ci-après, aux fins d'assurer un meilleur éclairage du visage de l'individu.

Optionnellement, les deux piliers (6, 7) supportent chacun une cloison latérale semi transparente (15), permettant de s'affranchir en grande partie des perturbations de l'éclairage externe. Le caractère semi transparent de ces cloisons (15) permet en outre de pouvoir surveiller depuis l'extérieur le bon déroulement de la traversée de la zone de progression par un individu, par exemple par les services de sécurité.

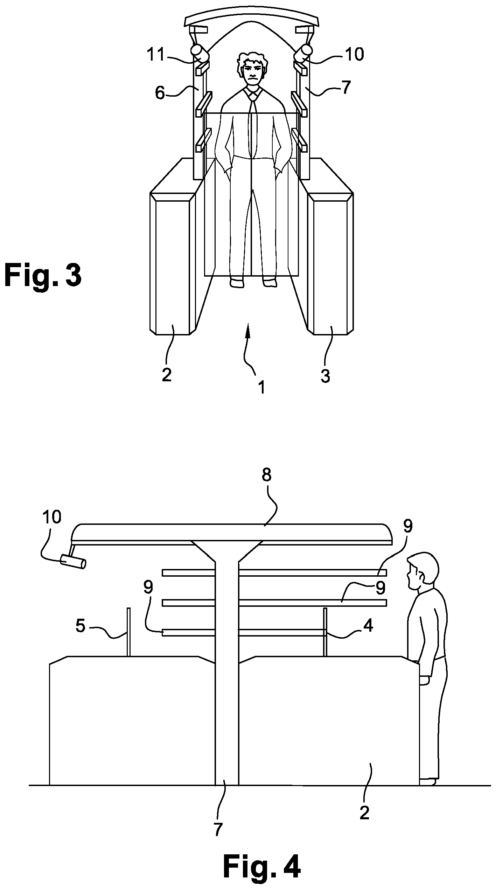

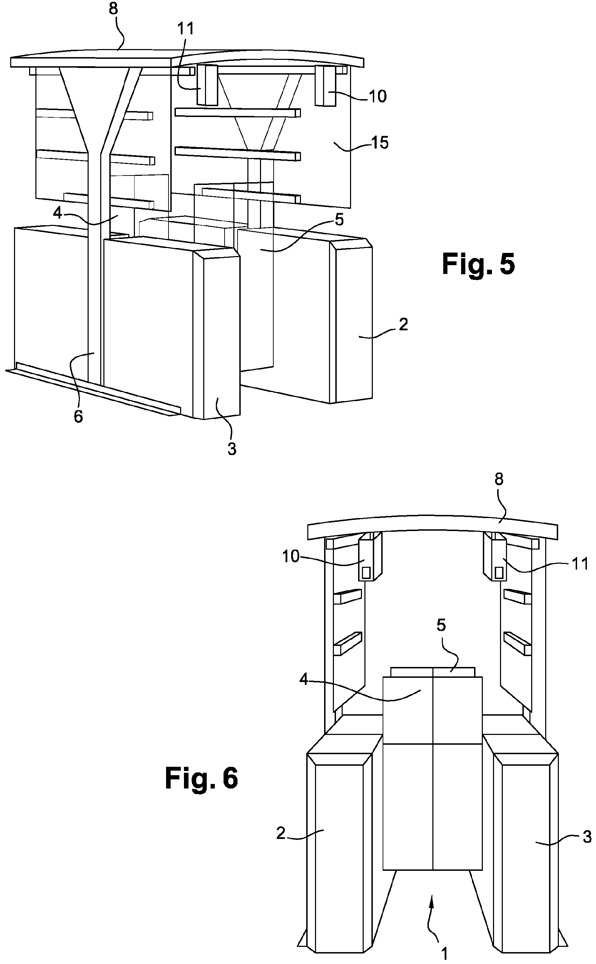

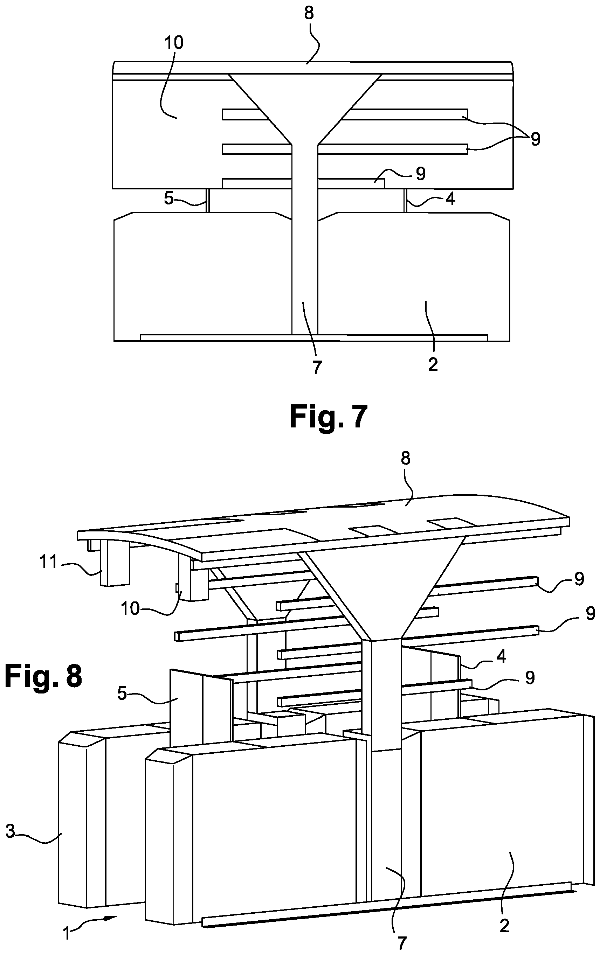

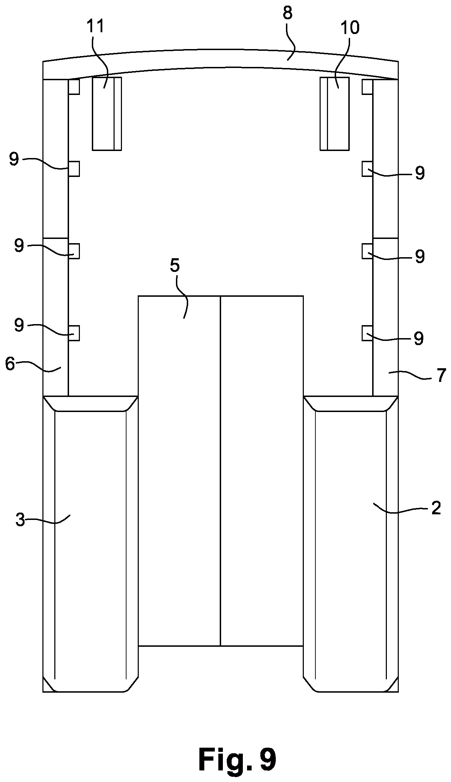

Les figures 2 à 9 représentent un second mode de réalisation du dispositif de la figure 1. Selon cette variante, les piliers (6, 7) supportent chacun au moins trois bandeaux lumineux horizontaux (9), régulièrement étagés sur la hauteur de la zone de progression (1).

Ces bandeaux lumineux horizontaux (9) sont donc respectivement situés de part et d'autre de la zone de progression. Ils sont destinés à générer un éclairage homogène de l'individu lors de son déplacement au sein de la zone de progression, cette homogénéité étant en outre optimisée en raison de la présence du plafond (8). L'étagement des différents bandeaux lumineux est optimisé pour éclairer uniformément le visage d'individus de différentes tailles, typiquement de 1 mètre à 2,10 mètres, et cela sur tout le passage dudit individu dans la zone de progression (1).

La lumière générée par les bandeaux lumineux (9) est relativement intense, et typiquement supérieure à 1000 lux, ce, dans le but de maximiser le facteur de netteté, et de minimiser l'effet de bougé résultant du déplacement de l'individu au sein de la zone de progression (1).

De tels moyens d'éclairement n'ont pas été représentés sur la figure 1. Il doit cependant être bien compris qu'ils y figurent, mais que pour des raisons pratiques de clarté et de compréhension, ils n'ont pas été matérialisés.

Apparaissent également sur les figures 2 à 9 les moyens d'acquisition du visage de l'individu. Ces moyens sont en l'espèce constitués par deux caméras (10, 11).

Les caméras (10, 11) sont orientées symétriquement en direction de l'intérieur de la zone de progression (1), par rapport à un plan vertical médian passant par la ligne du milieu de ladite zone.

Selon une version de base, les caméras (10, 11) ne subissent pas de déplacement lors du fonctionnement normal du dispositif d'accès. Ce faisant, l'absence de tels déplacements desdites caméras permet d'augmenter la rapidité du contrôle proprement dit, et corollairement de l'accès de l'individu à la prestation ou au lieu déterminé.

Cependant, et optionnellement, les caméras (10, 11) peuvent dynamiquement adapter leur champ de vision respectif vers le visage de l'individu, et ce en réglant leur azimut, leur altitude, leur facteur de zoom et leur hauteur en direction du visage de l'individu. Cette adaptation est rendue possible au moyen d'actionneurs (non représentés) asservis à une unité de traitement et de gestion (12) intégrée dans l'un desdits poteaux.

Selon cette option, ledit asservissement est guidé par un algorithme de détection faciale.

Les caméras (10, 11) présentent une résolution de 6Mp (3100*2100), ce qui permet à une distance de 2m60 et avec un angle de champ de 70°, de disposer environ de 40 pixels pour encoder la distance entre les deux yeux de l'individu.

A cet effet, on privilégie un capteur à forte sensibilité de type Sony entièrement configurable par logiciel, comme le permet la caméra de type mvBlueFOX3-2 de MATRIX VISION GmbH. Une connexion USB 3 permet d'obtenir un flux d'image haute résolution supérieure à 10 trames par seconde.

En raison de la configuration de capture, le visage des individus parcourant la zone de progression (1) ne se situe que sur une bande verticale centrée par rapport à la zone de progression (1). Ce faisant, seule cette bande centrale est configurée de telle manière qu'elle comprenne le visage de l'individu sur toute sa progression dans la zone de progression, et ce, afin d'optimiser le temps de traitement ultérieur de reconnaissance, mais également afin d'éviter la gestion de l'acquisition d'individu(s) qui se trouverai(en)t à proximité du dispositif de contrôle d'accès de l'invention, mais pas dans la ladite zone de progression.

Les caméras (10, 11) fonctionnent en mode portrait afin de maximiser la résolution. Leur positionnement, typiquement à l'aplomb de la seconde porte (5), les rend relativement éloignées de l'entrée dans la zone de progression (1), optimisant la profondeur de champ et corollairement la netteté du visage sur l'ensemble de la zone de passage. Ce faisant, on optimise les performances de la reconnaissance faciale.

La netteté est privilégiée sur l'entrée de la zone de progression. A cet endroit, la taille du visage apparait comme plus petite sur le capteur des caméras. En conséquence, c'est à ce niveau qu'il est important de maximiser le pouvoir de résolution des caméras.

Les caméras (10, 11) présentent avantageusement un large champ d'acquisition, typiquement de l'ordre de 70°, afin de permettre la capture d'images du visage d'individus de toutes tailles, tant adultes qu'enfants. La position relativement haute des caméras permet de ne pas obstruer leur champ de vision lorsque les portes (4, 5) de la zone de progression (1) sont fermées.

Le dispositif de l'invention peut être utilisé en mode identification, à savoir la recherche des références de l'individu transitant par la zone de progression (1) parmi les données stockées dans une base de données.

Optionnellement, ledit dispositif fonctionne en mode authentification, à savoir, la vérification de l'identité de l'individu transitant dans la zone de progression (1) vis-àvis d'un document d'identité présenté à l'entrée de ladite zone de progression (1).

Le dispositif comporte alors également, au voisinage de l'entrée dans la zone de canalisation et d'acquisition ou zone de progression (1), un lecteur de badge (13), sur lequel l'individu positionne un badge ou équivalent, intégrant un support de stockage de données biométriques, et au moins une image 3D de son visage préalablement acquise auprès d'un dispositif d'acquisition de l'image 3D. Alternativement, ce badge peut comporter un simple identifiant faisant référence à ladite image 3D stockée dans une base de données centralisée. Cette acquisition préalable de l'image 3D du visage de l'individu peut résulter de techniques classiques de scanner ou de photogrammétrie, techniques connues en tant que telles.

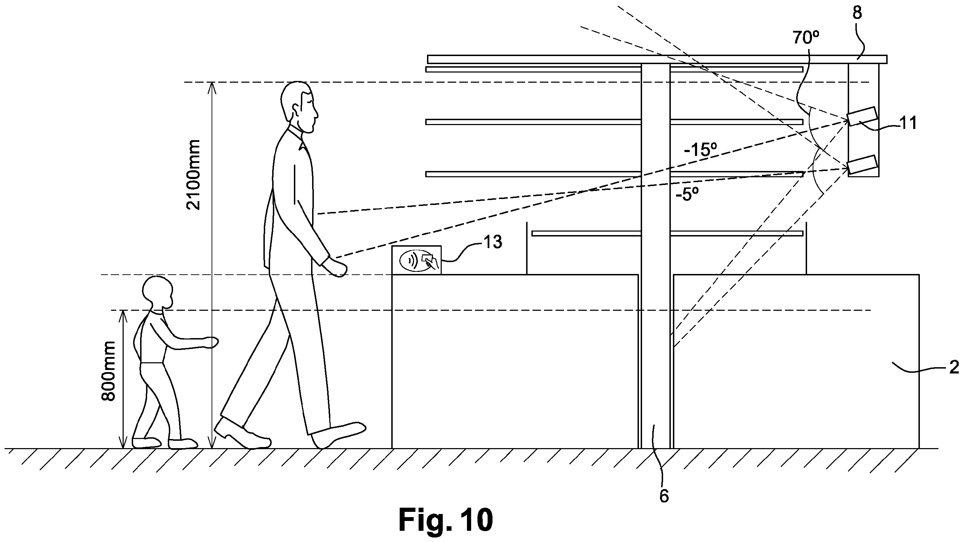

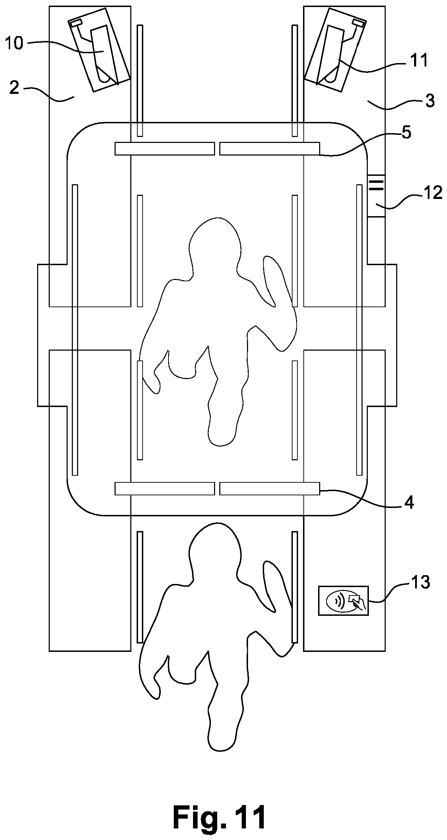

Les figures 10 et 11 illustrent les différentes phases du contrôle d'accès.

Lorsque l'individu se présente devant la zone de progression, il positionne son badge sur le lecteur de badge (13), la première (4) des deux portes étant fermée, et ne pouvant s'ouvrir aussi longtemps qu'un précédent individu est situé dans la zone située entre les deux portes. De fait, le dispositif comporte des détecteurs de présence (de type infrarouge ou cellule électrique), reliés à l'unité centrale de gestion et de traitement (12).

En l'absence d'individu dans ladite zone séparant les deux portes (4, 5), et à condition que la deuxième porte (5) soit fermée, la première porte (4) s'ouvre, libérant l'accès de l'individu dans la zone d'acquisition proprement dite de l'image 2D de son visage. Une fois ladite première porte (4) franchie, cette dernière se ferme, et l'acquisition 2D du visage de l'individu par les caméras (10, 11) est réalisée alors même que ledit individu se déplace dans la zone séparant les deux portes. La longueur de cette zone est déterminée de telle sorte que les caméras (10, 11) acquièrent un nombre suffisant de captures du visage de l'individu, afin d'assurer un contrôle efficace de l'image en résultant en vue d'une comparaison avec le fichier 3D dudit visage.

Avantageusement, l'acquisition du visage commence en amont de la zone de progression (1), typiquement dès le positionnement de l'individu à proximité du lecteur de badge (13).

Si la reconnaissance est positive, alors la deuxième porte (5) s'ouvre, libérant l'accès de l'individu à la prestation concernée, ou au lieu concerné. Dans le cas inverse, ladite deuxième porte demeure fermée, déclenchant un signal quelconque auprès de l'autorité compétente.

Cette reconnaissance met en oeuvre un algorithme approprié à base d'apprentissage, tel que par exemple celui implémenté par la société ID3 ou TOSHIBA, qui va détecter la présence de visage, puis calculer un vecteur biométrique sur ledit visage, et enfin effectuer une comparaison à partir de l'ensemble des vecteurs biométriques issu de fichier 3D du visage de l'individu concerné, provenant de la lecture du badge par le lecteur (13), avec les captures réalisées par les caméras (10, 11).

Typiquement, chaque caméra (10, 11) capture dix images par seconde. Le temps de passage moyen d'un individu dans la zone d'acquisition étant de 3 secondes, et la durée de reconnaissance faciale par l'algorithme étant d'environ 0,3 seconde de sorte que 9 images sur les 30 capturées sont utilisables pour respecter la durée impartie pour ladite reconnaissance, et répondre à l'exigence de rapidité souhaitée.

En raison de l'existence de deux caméras, c'est donc un nombre de 18 images qui va faire l'objet du traitement par l'algorithme. Les images dont le facteur de netteté est le plus élevé, sont privilégiées. Le facteur de netteté est calculé à partir du gradient local du visage autour de la zone du visage détecté sur chaque image. Avantageusement, on utilise la corrélation de position des visages pour optimiser le temps de détection.

Lors de chaque acquisition du visage, il est possible d'estimer les trois angles de poses de l'individu, et notamment les angles dits de « Yaw » (embardée, axe vertical), de « pitch » (élévation, axe latéral), et de « Roll » (roulis, axe longitudinal). Dans le cas d'acquisition de véritables visages et non pas de reproduction sur une photographie 2D présentée par un imposteur, la différence des angles verticaux perçue par chaque caméra suit une loi bien précise. Le respect de cette loi permet de vérifier l'absence d'imposteur qui tenterait de traverser le dispositif de l'invention avec un simple photographie 2D qu'il plaquerait devant son visage.

La longueur totale du dispositif, c'est-à-dire la zone de progression effective de l'individu concerné pour le contrôle d'accès, est typiquement de 3 mètres, et la durée nécessaire à la reconnaissance de son visage et donc à l'accès effectif est typiquement comprise entre 5,5 et 7 secondes, incluant le temps nécessaire à la lecture de son badge, ce dernier pouvant typiquement être de 2 secondes.

On conçoit dès lors l'extrême rapidité de la réalisation de ce contrôle d'accès. En raison en outre du procédé de reconnaissance mis en oeuvre, cette rapidité se cumule avec la qualité du contrôle.

Les exemples qui précèdent mettent en oeuvre une reconnaissance ou acquisition 2D du visage de l'individu en cours de progression dans la zone (1). L'invention concerne également la possibilité de mettre en oeuvre une reconnaissance ou acquisition 3D dudit visage. Cette acquisition 3D peut par exemple être de type photogrammétrie bicaméra, dans des conditions proches de celle mise en oeuvre en temps réel par la vision binoculaire humaine. Cette reconstruction photogrammétrique peut être calculée en moins d'une seconde du fait de la forte redondance des deux acquisitions liée à la faible distance entre les 2 yeux. Par exemple, à 2 mètres, l'écart angulaire formé par les 2 yeux est inférieure à 3degrés.

## Revendications

1. Dispositif de contrôle d'accès dynamique d'un individu par reconnaissance 2D ou 3D du visage d'un individu à partir de son acquisition préalable ou antérieure 3D, comprenant :
- une zone (1) de canalisation de la progression dudit individu et d'acquisition d'une image 2D ou 3D du visage de ce dernier, susceptible d'être obturée au moyen de deux portes escamotables (4, 5), séparées l'une de l'autre d'une distance déterminée, et dont l'ouverture ne peut être simultanée ;
- au moins deux moyens d'acquisition 2D ou 3D (10, 11) du visage de l'individu lors de sa progression au sein de ladite zone (1), orientés selon deux angles différents par rapport à un plan vertical médian passant par la ligne du milieu de ladite zone ;
- des moyens d'éclairement (9) de l'individu dans ladite zone de canalisation et d'acquisition (1), constitués d'un certain nombre de bandeaux lumineux linéaires (9), et notamment d'au moins trois, orientés horizontalement, et positionnés selon des hauteurs différentes entre les deux portes (4, 5) ;
- des moyens d'accession à un fichier contenant une image 3D préalablement acquise du visage de l'individu;
- une unité de traitement des signaux transmis par les moyens d'accession et par les moyens d'acquisition et de gestion (12) du dispositif

2. Dispositif de contrôle d'accès dynamique d'un individu selon la revendication 1, ***caractérisé* en ce que** les moyens d'acquisition 2D ou 3D sont constitués de caméras (10, 11), réglables en hauteur, en inclinaison et en rotation, afin notamment de s'adapter à la taille de l'individu.

3. Dispositif de contrôle d'accès dynamique d'un individu selon l'une des revendications 1 et 2, ***caractérisé* en ce que** les moyens d'accession au fichier 3D de l'individu, sont constitués d'un organe de lecture (13) d'un support dudit fichier, positionné en amont de la zone de canalisation de la progression de l'individu et d'acquisition d'une image 2D ou 3D du visage de ce dernier, et connecté à l'unité de traitement et de gestion (12).

4. Dispositif de contrôle d'accès dynamique d'un individu selon la revendication 3, ***caractérisé* en ce que** l'organe de lecture du support de l'image 3D du visage de l'individu préalablement acquise sont constitués d'un lecteur de badge.

5. Dispositif de contrôle d'accès dynamique d'un individu selon l'une des revendications 1 et 2, ***caractérisé* en ce que** les moyens d'accession au fichier 3D de l'individu sont constitués d'un organe de lecture (13) d'un support d'un fichier, positionné en amont de la zone de canalisation de la progression de l'individu et d'acquisition d'une image 2D ou 3D du visage de ce dernier, ledit fichier comportant l'identifiant de l'individu concerné à l'image 3D de son visage stockée dans une base de données, l'organe de lecture étant connecté à l'unité de traitement et de gestion (12), elle-même susceptible de se connecter à ladite base de données.

6. Dispositif de contrôle d'accès dynamique d'un individu selon l'une des revendications 1 à 5, ***caractérisé* en ce que** la zone de canalisation de la progression et d'acquisition (1) est surmontée par un plafond (8), destiné à minimiser l'influence de la luminosité extérieure, et corollairement, d'optimiser la qualité de l'acquisition de l'image 2D ou 3D du visage de l'individu.

7. Dispositif de contrôle d'accès dynamique d'un individu selon l'une des revendications 1 à 6, ***caractérisé* en ce que** la zone de canalisation de la progression et d'acquisition (1) est définie par deux cloisons ou parois latérales (2, 3).

8. Dispositif de contrôle d'accès dynamique d'un individu selon la revendication 7, ***caractérisé* en ce que** les cloisons ou parois latérales (2, 3) sont surmontées chacune d'une cloison latérale semi transparente (15).

## Patentansprüche

1. Zutrittskontrollvorrichtung für Personen mittels 2D- oder 3D-Gesichtserkennung nach vorangegangener 3D-Aufnahme, umfassend:
- einen Bereich (1) zur Kanalisierung des Voranschreitens einer Person und zur Erfassung eines 2D- oder 3D-Bildes ihres Gesichts, der durch zwei zurückziehbare Türen (4, 5) verschlossen werden kann, die durch einen bestimmten Abstand voneinander getrennt sind und die sich nicht gleichzeitig öffnen können;
- mindestens zwei Mittel (10, 11) zur 2D- oder 3D-Erfassung des Gesichts der Person während ihres Voranschreitens innerhalb des Bereichs (1), die in zwei verschiedenen Winkeln in Bezug auf die Hauptrichtung des Bereichs ausgerichtet sind;
- Mittel (9) zur Beleuchtung der Person im Kanalisierungs- und Erfassungsbereich (1), die aus einer bestimmten Anzahl von linearen Lichtbändern (9), insbesondere mindestens drei, bestehen, die horizontal ausgerichtet und in unterschiedlichen Höhen zwischen den beiden Türen (4, 5) angeordnet sind;
- Mittel zum Zugriff auf eine Datei, die ein zuvor erfasstes 3D-Bild des Gesichts der Person enthält;
- eine Einheit zur Verarbeitung der Signale, die von den Zugriffsmitteln und von den Mitteln zur Erfassung und zur Verwaltung (12) der Vorrichtung übertragen wurden.

2. Zutrittskontrollvorrichtung für Personen nach Anspruch 1, ***dadurch gekennzeichnet,* dass** die 2D- oder 3D-Erfassungsmittel aus Kameras (10, 11) bestehen, die in Höhe, Neigungswinkel und Drehung verstellbar sind, um sich insbesondere an die Größe der Person anzupassen.

3. Zutrittskontrollvorrichtung für Personen nach einem der Ansprüche 1 und 2, **dadurch gekennzeichnet, dass** die Zugriffsmittel auf die 3D-Datei der Person aus einem Leseorgan (13) eines Trägers einer Datei bestehen, das vor dem Bereich der Kanalisierung des Voranschreitens der Person und der Erfassung eines 2D- oder 3D-Bildes des Gesichts dieser Person angeordnet ist und mit der Verarbeitungs- und Verwaltungseinheit (12) verbunden ist.

4. Zutrittskontrollvorrichtung für Personen nach Anspruch 3, ***dadurch gekennzeichnet,* dass** das Leseorgan des Trägers des zuvor erfassten 3D-Bildes des Gesichts der Person aus einem Badge-Lesegerät besteht.

5. Zutrittskontrollvorrichtung für Personen nach einem der Ansprüche 1 und 2, ***dadurch gekennzeichnet,* dass** die Zugriffsmittel auf die 3D-Datei der Person aus einem Leseorgan (13) eines Trägers einer Datei bestehen, das vor dem Bereich der Kanalisierung des Voranschreitens der Person und der Erfassung eines 2D- oder 3D-Bildes des Gesichts dieser Person angeordnet ist, wobei die Datei die ID der betreffenden Person zu dem in einer Datenbank gespeicherten 3D-Bild ihres Gesichts enthält, wobei das Leseorgan mit der Verarbeitungs- und Verwaltungseinheit (12) verbunden ist, die ihrerseits in der Lage ist, eine Verbindung zu der Datenbank herzustellen.

6. Zutrittskontrollvorrichtung für Personen nach einem der Ansprüche 1 bis 5, ***dadurch gekennzeichnet,* dass** über dem Bereich der Kanalisierung des Voranschreitens und der Erfassung (1) eine Überdachung (8) angebracht ist, die dazu bestimmt ist, den Einfluss der Außenhelligkeit zu minimieren und folglich die Qualität der Erfassung des 2D- oder 3D-Bildes des Gesichts der Person zu optimieren.

7. Zutrittskontrollvorrichtung für Personen nach einem der Ansprüche 1 bis 6, ***dadurch gekennzeichnet,* dass** der Bereich der Kanalisierung des Voranschreitens und der Erfassung (1) durch zwei Trennwände oder Seitenwände (2, 3) festgelegt ist.

8. Zutrittskontrollvorrichtung für Personen nach Anspruch 7, ***dadurch gekennzeichnet,* dass** auf den Trennwänden oder Seitenwänden (2, 3) jeweils eine halbdurchsichtige Seitenwand (15) angebracht ist.

## Claims

1. Dynamic access control device for an individual by 2D or 3D face recognition of an individual after preliminary or subsequent 3D acquisition, comprising:
- a zone (1) for channelling the progression of said individual and acquiring a 2D or 3D image of the latter's face, capable of being shut off by means of two retractable doors (4, 5), separated from one another by a determined distance, and the opening of which cannot be simultaneous;
- at least two 2D or 3D acquisition means (10, 11) of the face of the individual during its progression within said zone (1), oriented along two different angles with respect to a median vertical plane intersecting the line of the middle of said zone;
- means for illuminating (9) the individual in said channelling and acquisition zone (1), constituted of a certain number of linear light strips (9), and in particular, of at least three, oriented horizontally, and positioned along different heights between the two doors (4, 5);
- means for accessing a file containing a 3D image preliminarily acquired of the face of the individual;
- a unit for processing signals transmitted by the accession means and by the acquisition and management means (12) of the device.

2. Dynamic access control device for an individual according to claim 1, ***characterised* in that** the 2D or 3D acquisition means are constituted of cameras (10, 11), which are adjustable by height, tilt and rotation, in order in particular to be adapted to the size of the individual.

3. Dynamic access control device for an individual according to one of claims 1 and 2, ***characterised* in that** the means for accessing the 3D file of the individual, are constituted of a member for reading (13) a medium of said file, positioned upstream from the zone for channelling the progression of the individual and acquisition of a 2D or 3D image of the face of the latter, and connected to the processing and management unit (12).

4. Dynamic access control device for an individual according to claim 3, ***characterised* in that** the member for reading the medium of the 3D image of the face of the individual preliminarily acquired are constituted of a badge reader.

5. Dynamic access control device for an individual according to one of claims 1 and 2, ***characterised* in that** the means for accessing the 3D file of the individual are constituted of a member (13) for reading a medium of a file, positioned upstream from the zone for channelling the progression of the individual and acquiring a 2D or 3D image of the face of the latter, said file comprising the ID of the individual whose 3D image of their face is stored in a database, the reading member being connected to the processing and management unit (12), itself able to be connected to said database.

6. Dynamic access control device for an individual according to one of claims 1 to 5, ***characterised* in that** the zone (1) for channelling the progression and acquiring is surmounted by a ceiling (8), intended to minimise the impact of outside light, and relatedly, to optimise the quality of the acquisition of the 2D or 3D image of the face of the individual.

7. Dynamic access control device for an individual according to one of claims 1 to 6, ***characterised* in that** the zone (1) for channelling the progression and acquiring is defined by two side partitions or walls (2, 3).

8. Dynamic access control device for an individual according to claim 7, ***characterised* in that** the side partitions or walls (2, 3) are each surmounted by a semitransparent side partition (15).
